# EUROPEAN PATENT SPECIFICATION

(11) **EP 1 639 448 B1**
(45) Date of publication and mention of the grant of the patent: **25.04.2007**
(21) Application number: 04736544.0
(22) Date of filing: 10.06.2004
(51) Int. Cl.: G06F 7/72

(54) **IMPROVED INVERSION CALCULATIONS**
VERBESSERTE INVERSIONSBERECHNUNGEN
CALCULS D'INVERSION AMELIORES

(30) Priority: 21.06.2003 GB 0314562
(43) Date of publication of application: 29.03.2006
(73) Proprietor: Koninklijke Philips Electronics N.V., 5621 BA Eindhoven (NL)
(72) Inventor: HUBERT, Gerardus. T. M., Redhill, Surrey RH1 5HA (GB); VAN RIJNSWOU, Sander M., Redhill, Surrey RH1 5HA (GB)
(74) Representative: White, Andrew Gordon
(86) International application number: PCT/IB2004/001981
(87) International publication number: WO 2004/114123

(56) References cited:
- WO-A1-99/04332
- US-A1- 2001 054 052
- LORENCZ R: "NEW ALGORITHM FOR CLASSICAL MODULAR INVERSE" CRYPTOGRAPHIC HARDWARE AND EMBEDDED SYSTEMS. INTERNATIONAL WORKSHOP, XX, XX, 13 August 2002 (2002-08-13), pages 57-70, XP001160521
- TAO ZHOU ET AL: "New algorithm and fast v-lsi implementation for modular inversion in galois field gf(p)'" INTERNATIONAL CONFERENCE ON COMMUNICATIONS, CIRCUITS AND SYSTEMS, IEEE 2002, vol. 2, 29 June 2002 (2002-06-29), pages 1491-1495, XP010631803

## Description

The present invention relates to a method of performing an inversion operation and to apparatus for performing an inversion operation.

Elliptic Curve Cryptography (ECC) involves the use of calculations on an elliptic curve relationship over GF(p) or GF(2ⁿ)and requires the multiplication of long integers which are carried out repeatedly during the implementation of, for example, public key algorithms in cryptographic processors.

Typically, the multiplication operations must be carried out many hundreds of times to complete an encryption or decryption operation, and so it is important that the cryptographic devices that perform these operations execute the long multiplications quickly using a high speed multiplier.

ECC calculations require also an inversion calculation, i.e. the calculation of Z⁻¹, such that the product Z.Z⁻¹=1 mod N. Every point addition and point doubling calculation requires such a calculation. The present algorithms are computational intensive.

Another way is working in the so-called Projective Space. This postpones the inversion calculation to the end and has to be done only once, but the trade-off is that the number of multiplications is largely increased.

Increasingly, such cryptographic algorithms are used in electronic devices for example smart cards, and in these applications processing capability and power consumption is severely limited.

One conventional calculation method is the binary GCD system which works with pairs of auxiliary variables. One pair is reduced in size by dividing by 2 when even, or by subtracting when odd.

However, in the GCD system often it is necessary to correct the operation on the other pair by the addition of half of the modulus.

Another conventional calculation method Is the Kallski system which again uses two pairs of auxiliary variables, of which one pair is reduced by dividing by 2 when even, or by subtracting when odd.

However, in this system, any required correction is delayed to the second stage.

It is therefore an object of the present Invention to provide a more efficient inversion operation.

It is also an object of the present Invention to provide an inversion process with fewer operations.

It is also an object of the present invention to provide an inversion operation which is completed faster than In conventional systems.

According to one aspect, the present invention provides a method as defined by claim 1.

One advantage of the present invention is that most operations are only done on the Most Significant Words of the auxiliary variables. After a number of such computations, a number of multiplications are done on the complete auxiliary variables, which are simpler.

These advantages result in the number of necessary operations being reduced as compared to conventional methods, thereby ensuring that the calculations can be effected more quickly.

Thus a significant benefit provided by the present invention is that the time taken to complete the entire calculating operation is reduced.

Moreover, the degree of security afforded by the method of the present Invention is maintained as compared to conventional cryptographic methods.

Preferably, the method comprises four auxiliary variables being U, V, R and S having the Invariances:-
|S.V-R.U| = N
S.Y = U mod N
R.Y = V mod N.

Preferably, the method operates with the Most Significant Words of the variables.

Thus an advantage of the present invention is that the calculation operations are effected faster.

According to another aspect, the present invention provides a computer program product directly loadable into the internal memory of a digital computer, comprising software code portions for performing the method of the present invention when said product is run on a computer.

According to another aspect, the present invention provides a computer program directly loadable Into the internal memory of a digital computer, comprising software code portions for performing the method of the present invention when said program is run on a computer.

According to another aspect, the present invention provides a carrier, which may comprise electronic signals, for a computer program embodying the present invention.

According to another aspect, the present invention provides electronic distribution of a computer program product, or a computer program, or a carrier of the present invention.

According to another aspect, the present invention provides apparatus as defined by claim 13.

The method and apparatus of the present invention is applicable to calculations over GF(p), GF(2ⁿ) and also long-integer division.

In order that the present invention may more readily be understood, a description is now given, by way of example only, reference being made to the accompanying drawings, in which:-
Figure 1 is a block diagram of an application of the invention in a smart card;
Figure 2 is a schematic drawing of an inversion operation embodying the present invention;
Figure 3 is a hardware implementation of the present invention;
Figure 4 is a further detailed hardware implementation of the present invention;
Figure 5 is a schematic drawing of another inverse operation of the present invention;
Figure 6 is a schematic drawing of another inverse operation of the present invention;
Figure 7 is a schematic drawing of a further operation of the present invention.

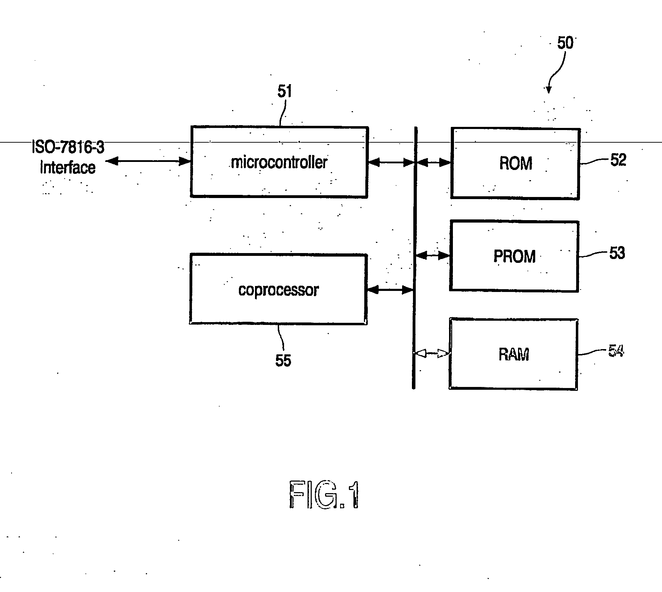

Figure 1 shows a block diagram of a hardware implementation of the present invention incorporating a smart card 50 with the following components:
- Microcontroller 51 for general control to communicate with the outside world via the interface. It sets pointers for data in RAM/ROM and starts the coprocessor.
- Interface to the outside world, for contact with smart cards e.g. according to ISO-7816-3.

∘ A Read Only Memory (ROM) 52 for the program of the microcontroller.
∘ A Programmable Read Only Memory (Flash or EEPROM) 53 for the non-volatile storage of data or programs.
∘ RAM 54 for storage of volatile data, e.g for storage of intermediate results during calculations.
∘ Coprocessor 55 dedicated to perform special high-speed tasks for ECC or RSA calculations. When a task is ready, control is returned to the microcontroller.

In a variant, the present invention is implemented in software with a microprocessor, ALU to provide add, subtract, shift operations with programming of the controller to provide control logic, and degree detection by shift registers. 2

There is shown in Figure e an inversion operation of the present invention which is described below.

Thus this method of calculation over GF(p) involves the operation
R = Y⁻¹ mod N having four auxiliary variables U, V, S and R, with
U=Y
V=N
S = 1
R = 0,

U and V always being positive.

The degree of an auxiliary variable is the number of relevant bits to represent it. Thus for example, if U = 111100
then the degree of U = dU is 6;
and, if V = 001110,
then the degree of V = dV is 4.

The operation involves taking:
B = dU - dV (Step S1);
and, if b<0, then performing the operations (Step S2, S3):-
(swap U, V)
(swap R, S)
(swap dU, dV)
b=-b
then U = U-2^{b}.V
S = S - S^{b}.R
and if (U< 0)
then (Step S4) U = - U
S=-S,
if (R<0), then R = R+N
if (R>N), then R = R-N.

Thus the following invariants hold after each loop iteration:
gcd(U,V)= gcd(Y,N)
SY = U mod N
RY = V mod N
|SV-RU| = N.

In every step, either the degree of U is decreased or the degree of V. Therefore U and V become smaller and smaller, until in the last step U becomes 0 (U=2^{b}V).

Since U= 0, the invariance gcd(U,V)=gcd(Y,N) implies V=gcd(Y,N)=1, since Y and N are relative prime.

Then RY=1 mod N or R = Y⁻¹ mod N.

When U= 0, -N<R<2N, giving at most one correction step namely: either adding or subtracting N.

In practice, R appears always to be smaller than N, so that subtraction of N never occurs.

Also, |SV|<2N and |RU|<2N temporary.

Since they are all integers,
|S|<2N;
|V|<2N;
|R|<2N;
|U|<2N.

For these variables, only one bit more than N requires representing them. For S and R, a sign-bit is needed too.

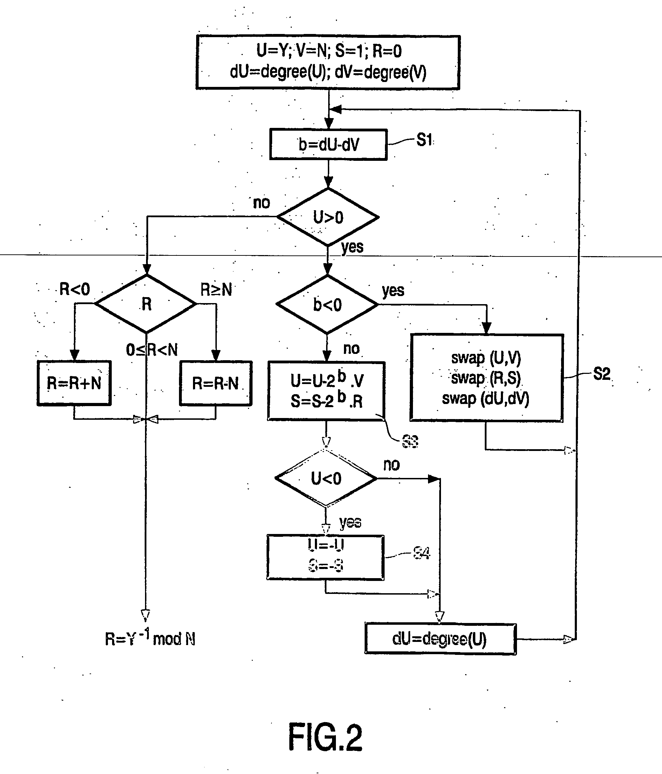

Figure 2 shows the hardware implementation of the method of the present invention.

Registers 10, 11, 12 and 13 hold variables U, V, S, R. The adders 14, 15 perform addition, subtraction, negation and mod 2 additions. V and R can be shifted over b bits. The control logic 16 controls the process. There are two degree detectors 17, 18, one for U and one for V. The dSubtractor 19 gives the difference (b).

Initially, Y is loaded into U, N into V, S is set to 1 and R to 0.

Then the process is started.

When b<0, U and V exchange their contents, S and R do the same, and b is negated.

Both adders are set to subtraction and the shifters are set to shift over b bits. Then the subtraction is performed. When U is negative, the adders are set to negate both U and S.

The process is done as long as U ≠0.

When U=0 and R<0 or R>N, S is loaded with N. Then either R+N or R-N is calculated.

Normally, the operands consist of a number of words. However, in a variant, the calculations can be speeded up by using only the Most Significant Word two of the variables and 4 auxiliary variables with the size of 1 word, while keeping the invariances valid. It saves also chip area and power. The result is used as an estimator for the subsequent calculation on the whole operands.

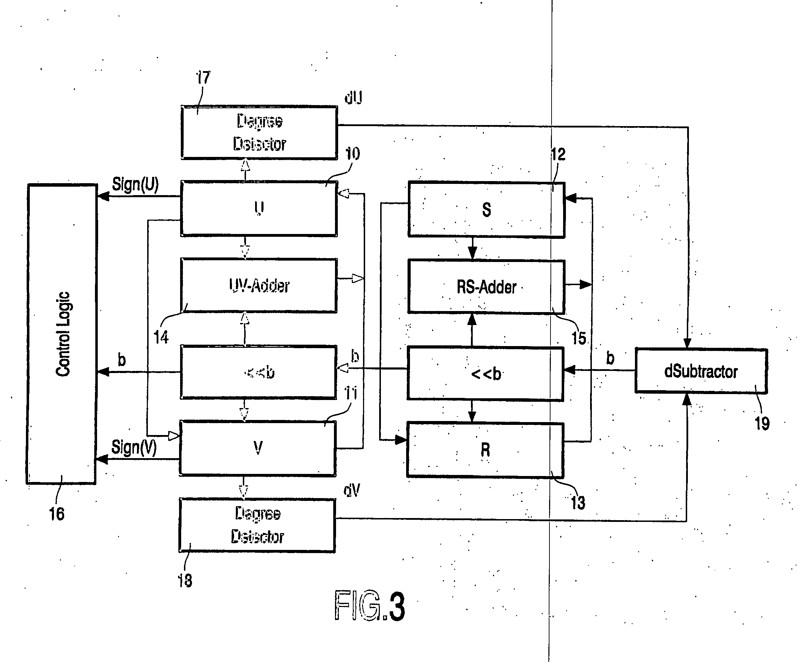

Figure 3 shows the more detailed hardware implementation. Registers 30 to 35, each with a 1 word capacity, hold U_{H},V_{H},uu, uv, vu and vv.

U_{H} and V_{H} are initially loaded with the Most Significant Word of U and V.
U = uu.U₀ - uv.V₀
V = vu.U₀ - vv.V₀
S = uu.S₀ - uv.R₀
R = vu.S₀ - vv.R₀
uu,uv vu and vv are words of convenient size.

The operation starts with uu=1, vv=-1 and uv=vu=0,
U₀=Y;
V₀=N;
S₀=1;
R₀=0.

Assume that the equations are still correct after a number of steps. After the next calculation, the equations are still correct. Since they are correct in the beginning, they remain correct.

When calculating U' = U-2^{b}V and S'= S-2^{b}R, then choose:
uu'=uu-2^{b}vu
uv'=uv-2^{b}vv
vu'=vu
vv'=vv.

When it is necessary to calculate U'=U+2^{b}V and S'=S+2^{b}R, then choose:
uu'=uu+2^{b}vu
uv'=uv+2^{b}vv
vu'=vu
vv'-vv.

When required, swap uu and vu, uv and w.

This swaps U and V as well R and S.

To update the operands, start with loading U_{H} with MSW of U and V_{H} with the MSW of V. Then,
uu=1,vv=-1 and uv=uv=0.

Then a number of calculations are done, the amount depending on the size of the words and how many useful bits are left over.

Since V_{H} is shifted, it is supplemented with zeros instead of the (unknown) right bits so U_{H} and V_{H} become smaller and smaller. The operation is halted when there are almost no bits left. Also the determination of the sign become incorrect.

Then calculate U, V, S and R by means of uu...vv and U₀...S₀.

This gives new reduced values of U and V, which still obey the invariance.

Then set U₀ to U, V₀ to V and the same for S₀ and R₀. Again set uu=1, vv=-1 and uv=vu=0.

Then repeat the procedure. Every time U and V become smaller and smaller, until they fit in the U_{H} and V_{H} registers.

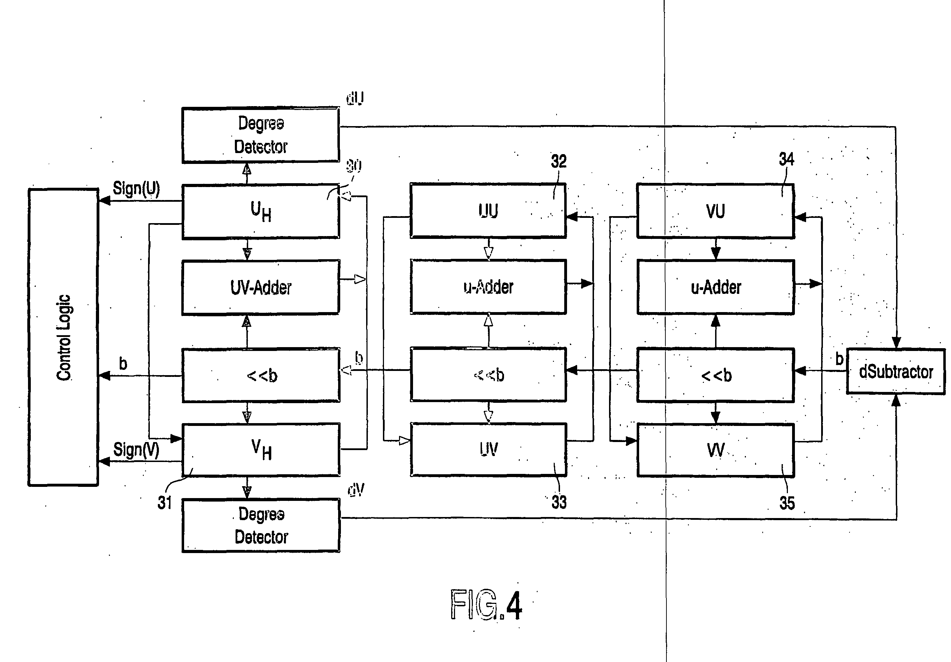

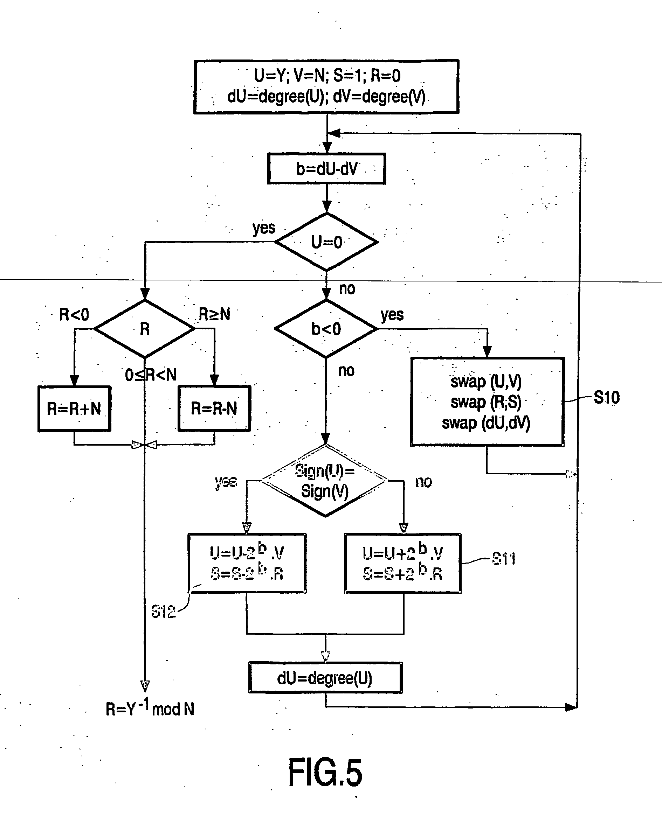

Then the calculation is no longer an estimation, but an exact calculation and it ends with the correct result. Finally, only R has to be recalculated to find Y⁻¹
In a variant to the method of Figures 1 to 4, the calculation method allows negative values for U and V and removes the correction step when U is negative (see Figure 5).

The degree of positive numbers is the number of bits after removing all leading zeroes and the degree of negative numbers is the number of bits after removing all leading ones.

Again, the auxiliary variables are:
U=Y;
V=N;
S=1;
R=0; while (U≠0) and
if (b<0) then effect:
{swap (U,V); swap (R,S) swap(dU,dV); b=-b};
if (Sign(U)=Sign(V))
then effect
{U=U-2^{b}.V;S=S-2^{b}.R;}
Else
{U=U+2^{b}.V; S=S+2^{b}.R;}
dU=degree(U);
if (R<0), then R=R+N;
if (R>N) then, R=R-N.

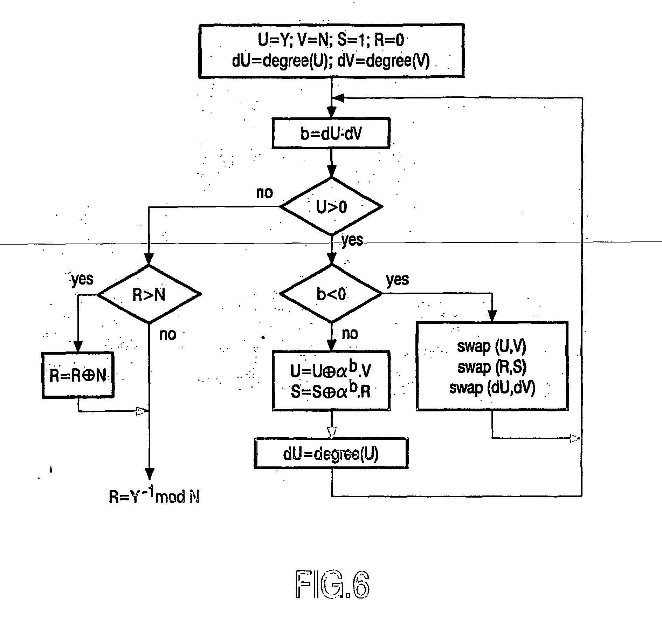

Figure 6 shows a second embodiment which is a calculation method over GF(2ⁿ), the major differences being:
a is the variable of the polynomials, U, V, S and R;
N is the irreducible polynomial;
the algorithm is simpler since there are no negative values and there is only a mod 2 addition.

Thus with
U=Y;
V=N;
S=1;
R=0;
while (U>0)
b=dU-dV
if (b<0) {swap(U,V);swap(R,S); swap(dU,dV); b=-b;}
U=U⊕α^{b}.V;
S=S⊕α^{b}.R;
d=degree(U);
if (R>N) R=R⊕N.

Thus, initially, Y is loaded into U, N into V, S is set to 1 and R to 0.

Then the process is started (Steps S10-S12).

When b<0, U and V exchange their contents, S and R do the same and b is negated.

Both adders are always set to add mod 2. The shifters are set to shift over b bits. Then the addition is performed.

The process is done as long U≠0

When U=0 and R=R>N, S is loaded with N, then R ⊕ N is calculated.

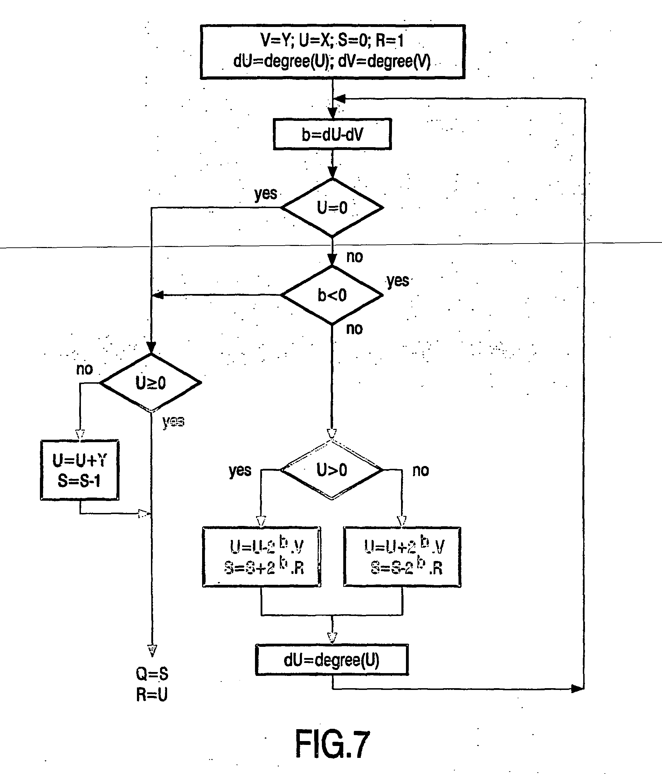

Figure 7 shows a third embodiment which is a calculation method for long-integer division, the major differences being:

Initially, X is loaded into U, Y into V, S is set to 0 and R to 1.

When U>0, then the UV-adder is set to subtraction and the RS-adder to addition, or the reverse is done, as appropriate. The shifters are set to shift over b bits. Then the addition/subtraction operation is performed.

The process is done for as long U≠0 and b≥0.

When the process is ready and U<0, then b is set to 0. Then one addition/subtraction is performed (U=U+V; S=S-R).

Then U is the remainder R' and S is the quotient Q, X = Q.Y+R' with 0≤R'<Y.

## Claims

1. A method of performing an inversion operation in a cryptographic calculation in an electronic device with at least two auxiliary variables U and V to calculate R=Y⁻¹ mod N, the method comprising setting U=Y and V=N and shifting a variable, then effecting a reduction (S3) by subtracting that variable from a larger variable, the reduction being effected using an operation U=U-2^{b}V for GF(p) and an operation U=U⊕α^{b}.V for GF(2ⁿ), where b=dU-dV, dU and dV being the degrees of U and V respectively, and α is the variable of the polynomials represented by the auxiliary variables.

2. A method according to Claim 1 wherein the variables are of the same degree.

3. A method according to Claim 1 or 2 comprising updating a plurality of additional variables such that invariances remain valid.

4. A method according to any preceding claim comprising four auxiliary variables being U, V, R and S, having the invariances:
|S.V-R.U| = N
S.Y = U mod N
R.Y = V mod N.

5. A method according to Claim 4 comprising decreasing U and V In size, step by step until U = 1.

6. A method according to Claim 5 comprising effecting the operation R.Y = 1 mod N or R = Y⁻¹ mod N, as appropriate.

7. A method according to any preceding claim comprising operating with the Most Significant Words of the variables.

8. A method according to any preceding claim comprising providing a method for long-integer division operations.

9. A computer program product directly loadable into the internal memory of a digital computer, comprising software code portions for performing the method of any one or more of Claims 1 to 8 when said product is run on a computer.

10. A computer program directly loadable into the internal memory of a digital computer, comprising software code portions for performing the method of any one of Claims 1 to 8 when said program is run on a computer.

11. A carrier, which may comprise electronic signals, for a computer program of Claim 10.

12. Electronic distribution of a computer program product of Claim 9 or a computer program of Claim 10 or a carrier of Claim 11.

13. Apparatus for performing an inversion operation in a cryptographic calculation with at least two auxiliary variables U and V to calculate R=Y⁻¹ mod N, the apparatus comprising means to set U=Y and V=N, means to shift a variable (V, R) and means (10-17) to effect a reduction by subtraction or addition of that variable from a larger variable, **characterised by** the reduction being effected using an operation U=U-2^{b}V for GF(p) and an operation U=U⊕α^{b}.V for GF(2ⁿ), where b=dU-dV, dU and dV being the degrees of U and V respectively, and α is the variable of the polynomials represented by the auxiliary variables.

14. Apparatus according to Claim 13 wherein the variables (V, R) are of the same degree without shifting.

15. Apparatus according to Claim 13 or 14 comprising means to update a plurality of additional variables such that invariances remains valid.

## Patentansprüche

1. Verfahren zur Durchführung einer Inversionsoperation in einer kryptographischen Berechnung in einem elektronischen Bauteil mit wenigstens zwei Hilfsvariablen U und V, um R = Y⁻¹ mod N zu berechnen, wobei das Verfahren umfasst:
- Setzen von U=Y und V=N und verschieben einer Variablen, daraufhin
- Durchführen einer Reduktion (S3), durch Subtrahieren dieser Variable von einer größeren Variable, wobei die Reduktion mit Hilfe einer Operation U=U-2^{b}V für GF(p) und mit einer Operation U=U⊕α^{b}.V für GF(2ⁿ) durchgeführt wird, wobei b=dU-dV ist, und dU und dV die Ordnungen von U bzw. V sind, und α eine Variable der Polynome ist, welche durch die Hilfsvariablen dargestellt sind.

2. Verfahren gemäß Anspruch 1, bei dem die Variablen die gleichen Ordnungen aufweisen.

3. Verfahren gemäß einem der Anspruche 1 oder 2, umfassend eine Aktualisierung einer Vielzahl von zusätzlichen Variablen, sodass Invarianzen gültig bleiben.

4. Verfahren gemäß einem der vorangehenden Ansprüche, mit vier Hilfsvariablen U, V, R und S, für welche folgende Invarianzen gelten:
|S.V - R.U| = N
S.Y = U mod N
R.Y = V mod N.

5. Verfahren gemäß Anspruch 4, umfassend Vermindern der Größe von U und V Schritt für Schritt, bis U = 1 ist.

6. Verfahren gemäß Anspruch 5, umfassend ein Anwenden entweder der Operation R.Y = 1 mod N oder R=Y⁻¹ mod N, je nachdem, welche angemessen ist.

7. Verfahren gemäß einem der vorangehenden Ansprüche, welches mit den höchstwertigen Datenwörtern der Variablen durchgeführt wird.

8. Verfahren gemäß einem der vorangehenden Ansprüche, welches ein Verfahren zur Long-Integer-Division umfasst.

9. Computerprogrammprodukt, das direkt in den internen Speicher eines digitalen Computers geladen werden kann und Softwareprogrammabschnitte umfasst, welche das Verfahren gemäß einem oder mehreren der Ansprüche 1 bis 8 durchführt, wenn das Produkt auf einem Computer ausgeführt wird.

10. Computerprogramm, das direkt in den internen Speicher eines digitalen Computers geladen werden kann und Softwareprogrammabschnitte umfasst, welche das Verfahren gemäß einem der Ansprüche 1 bis 8 durchführt, wenn das Programm auf einem Computer ausgeführt wird.

11. Träger, der elektronische Signale eines Computerprogramms gemäß Anspruch 10 enthalten kann.

12. Elektronische Distribution eines Computerprogrammprodukts gemäß Anspruch 9 oder eines Computerprogramms gemäß Anspruch 10 oder eines Trägers gemäß Anspruch 11.

13. Vorrichtung zum Durchführen einer Inversionsoperation in einer kryptographischen Berechnung mit wenigstens zwei Hilfsvariablen U und V, um R=Y⁻¹ mod N zu berechnen, wobei die Vorrichtung Mittel umfasst, U=Y und V=N zu setzen, Mittel umfasst, eine Variable (V, R) zu verschieben, und Mittel (10-17) umfasst, um eine Reduktion durch eine Subtraktion oder Addition dieser Variable von bzw. zu einem größeren Wert durchzuführen, **dadurch gekennzeichnet, dass** die Reduktion durch eine Operation U=U-2^{b}V für GF (p) und eine Operation U=U⊕α^{b}.V für GF (2ⁿ) ausgeführt wird, wobei b=dU-dV ist und dU und dV die Ordnungen von U bzw. V sind und α die Variable der Polynome ist, welche durch die Hilfsvariablen dargestellt sind.

14. Vorrichtung gemäß Anspruch 13, wobei die Variablen (V, R) ohne Verschiebung die gleiche Ordnung aufweisen.

15. Vorrichtung gemäß Anspruch 13 oder 14, welche Mittel zur Aktualisierung einer Vielzahl von zusätzlichen Variablen umfasst, derart, dass Invarianzen gültig bleiben.

## Revendications

1. Procédé permettant de réaliser une opération d'inversion au cours d'un calcul cryptographique dans un dispositif électronique utilisant au moins deux variables auxiliaires U et V pour calculer R = Y⁻¹ mod N, le procédé comprenant les étapes consistant à régler U = Y et V = N et à décaler une variable, puis à réaliser une réduction (S3) en soustrayant cette variable d'une variable plus grande, la réduction étant réalisée à l'aide d'une opération U = U-2^{b}V pour GF(p) et d'une opération U = Upa^{b}. V pour GF(2ⁿ), où b = dU-dV, dU et dV représentant respectivement les degrés de U et V, et α est la variable des polynômes représentés par les variables auxiliaires.

2. Procédé selon la revendication 1, dans lequel les variables sont du même degré.

3. Procédé selon la revendication 1 ou 2 comprenant la mise à jour d'une pluralité de variables supplémentaires de sorte que les invariances restent valides.

4. Procédé selon l'une quelconque des revendications précédentes comprenant quatre variables auxiliaires U, V, R et S, ayant les invariances :
|S.V-R.U| = N
S.Y = U mod N
R.Y = V mod N.

5. Procédé selon la revendication 4 comprenant la réduction de la taille de U et V, étape par étape jusqu'à ce que U = 1.

6. Procédé selon la revendication 5 comprenant la réalisation de l'opération R.Y = 1 mod N ou R = Y⁻¹ mod N, selon les besoins.

7. Procédé selon l'une quelconque des revendications précédentes comprenant la réalisation de l'opération avec les mots les plus significatifs des variables.

8. Procédé selon l'une quelconque des revendications précédentes comprenant la fourniture d'un procédé destiné aux opérations de division de nombres entiers longs.

9. Produit de programme informatique directement chargeable dans la mémoire interne d'un ordinateur numérique, comprenant des parties de code de logiciel pour réaliser le procédé selon une ou plusieurs des revendications 1 à 8 lorsque ledit produit est exécuté sur un ordinateur.

10. Programme informatique directement chargeable dans la mémoire interne d'un ordinateur numérique, comprenant des parties de code de logiciel pour réaliser le procédé selon l'une quelconque des revendications 1 à 8 lorsque ledit programme est exécuté sur un ordinateur.

11. Support, qui peut comprendre des signaux électroniques, pour un programme informatique selon la revendication 10.

12. Distribution électronique d'un produit de programme informatique selon la revendication 9 ou d'un programme informatique selon la revendication 10 ou d'un support selon la revendication 11.

13. Appareil permettant de réaliser une opération d'inversion au cours d'un calcul cryptographique utilisant au moins deux variables auxiliaires U et V pour calculer R = Y⁻¹ mod N, l'appareil comprenant des moyens pour régler U = Y et V = N, des moyens pour décaler une variable (V, R), et des moyens (10 à 17) pour réaliser une réduction par soustraction ou addition de cette variable d'une variable plus grande, **caractérisé en ce que** la réduction est réalisée à l'aide d'une opération U = U-2^{b}V pour GF(p) et d'une opération U = Uρa^{b}.V pour GF(2ⁿ), où b = dU-dV, dU et dV représentant respectivement les degrés de U et V, et α est la variable des polynômes représentés par les variables auxiliaires.

14. Appareil selon la revendication 13, dans lequel les variables (V, R) sont du même degré sans décalage.

15. Appareil selon la revendication 13 ou 14 comprenant des moyens de mise à jour d'une pluralité de variables supplémentaires de sorte que les invariances restent valides.
